# EUROPEAN PATENT APPLICATION

(11) **EP 4 497 910 A1**
(43) Date of publication of application: **29.01.2025**
(21) Application number: 24191099.1
(22) Date of filing: 26.07.2024
(51) Int. Cl.: E21B 47/12, E21B 33/035, E21B 41/00

(54) **SUBSEA CONTROL AND COMMUNICATION SYSTEM**

(30) Priority: 27.07.2023 GB 202311565
(71) Applicant: Siemens Energy AS, 0596 Oslo (NO)
(72) Inventor: KRISTIANSEN, Karstein Berge, 7051 Trondheim (NO)
(74) Representative: Horn Kleimann Waitzhofer Schmid-Dreyer Patent- und Rechtsanwälte PartG mbB

(57) **Abstract**

A subsea control system for transmitting and receiving subsea related data to and from a surface control system includes a connecting Subsea Electronic Module (SEM) in connection with a high-speed communications conduit. The connecting SEM receives and transmits the subsea related data to and from the surface control system via the high-speed communications conduit. A plurality of processing SEMs for which each is connected to the connecting SEM to receive and transmit the subsea related data. A portion of the connection between each processing SEM and the connecting SEM includes a high-speed connection, wherein the receiving and transmitting of subsea related data between the connecting SEM and the processing SEMs on the high-speed connection is in compliance with the IEEE 802.3cg standard as of the effective date of filing of this patent.

## Description

### BACKGROUND

The present invention relates to a subsea communication and control, and more specifically to subsea communication and control including a subsea communication adapter for providing communication between a first subsea unit and a second subsea unit.

Due to the increasing energy demands, offshore oil and gas production is moving into deeper waters. For ensuring an efficient and secure production, processing facilities are being installed on the ocean floor. Such subsea installations can comprise a range of components, including pumps, compressors, and the like as well as a power grid for operating them. The power grid may for example comprise a subsea transformer, subsea switch gear and subsea variable speed drives.

Components of such subsea installation can comprise electronic equipment that can be monitored and/or controlled from a topside installation, such as a topside control system which may be located on a fixed or floating vessel, for example a ship or platform, or may be based on shore. The subsea installation can for example comprise one or more subsea control modules, which can receive commands from the topside installation, and which can transmit information to the topside installation, such as sensor readings or the like, and which may further communicate with each other. In other configurations, a number of sensors may be interrogated from the topside installation, for example through a subsea communication unit.

An existing subsea communication infrastructure is generally based on a topology in which the equipment installed subsea communicates on a multidrop bus with one unit that is installed topside. In such topology, the topside unit may request certain data, or may send commands to one or more individual subsea units, for example using a round robin scheme. In such communication topologies, all subsea units require the same type of electrical data interface and are required to use the same protocol for data transmission. Further, all units connected to the multidrop bus are required to operate with the same data transmission performance. In a practical implementation, this means that the oldest or slowest unit dictates the bandwidth limitations for all connected units.

The data transmission capability of such multidrop system is accordingly relatively low. Furthermore, since all units are required to adhere to the multidrop data communication, upgrading of such system is difficult and all units would need to be replaced for the introduction of a faster data transmission technology.

Accordingly, it is desirable to improve the communication between subsea units and topside units, and in particular to be capable of increasing the bandwidth and facilitating the upgrading of such communication system.

### SUMMARY

In one aspect, a subsea control system for transmitting and receiving subsea related data to and from a surface control system includes a connecting Subsea Electronic Module (SEM) in connection with a high-speed communications conduit. The connecting SEM receives and transmits the subsea related data to and from the surface control system via the high-speed communications conduit. A plurality of processing SEMs for which each is connected to the connecting SEM to receive and transmit the subsea related data. A portion of the connection between each processing SEM and the connecting SEM includes a high-speed connection, wherein the receiving and transmitting of subsea related data between the connecting SEM and the processing SEMs on the high-speed connection is in compliance with the IEEE 802.3cg standard as of the effective date of filing of this patent.

The subsea control system may also include a plurality of processing SEMs connected with the connecting SEM to define a network having a multidrop configuration.

The subsea control system may also include a first processing SEM that utilizes a legacy communication scheme, and where a connection between the first processing SEM and the connecting SEM includes a first portion that utilizes the legacy communication scheme and a second portion that utilizes a new communication scheme in compliance with the IEEE 802.3cg standard as of the effective date of filing of this patent.

The subsea control system may also include a connecting SEM that provides a multidrop link to each of the processing SEMs, without requiring direct connection of each processing SEM to a central distribution unit.

The subsea control system may also include a subsea communication adapter positioned in the connection to define the first portion and the second portion, the subsea communication adapter operable to convert communication signals between the legacy communication scheme and the new communication scheme.

The subsea control system may also use a legacy communication scheme that is a non-Ethernet communication method.

The subsea control system may also include a subsea communication adapter that is configured to convert between the legacy communication scheme and the new communication scheme both on a physical level and on a protocol level.

The subsea control system may also include a subsea communication adapter that includes a first communication interface configured to establish at least one of a CAN connection, an RS-485 connection, an RS-422 connection, a RS-232 connection, or a network modem connection, and a second communication interface configured to establish an Ethernet connection.

The subsea control system may also include a subsea communication adapter that includes a subsea enclosure that maintains a predefined internal pressure when installed subsea, where the subsea enclosure is configured to allow deployment of the subsea communication adapter in a water depth between 350 m and 5000 m.

The subsea control system may also include a subsea communication adapter that is deployable in water at a depth between 1000 m and 5000 m.

In another aspect, a method for transmitting and receiving subsea related data to and from a surface control system and a subsea control system includes receiving and transmitting, in a connecting Subsea Electronic Module (SEM) the subsea related data via at least one high-speed communications conduit. The method also includes transmitting and receiving, to and from, a plurality of processing SEMs the subsea related data, where the receiving and transmitting of subsea related data between the connecting SEM and each of the processing SEMs is in compliance with an IEEE 802.3cg standard as at the effective date of filing of this patent.

The method may also include connecting the plurality of processing SEMs with the connecting SEM to define a network having a multidrop configuration.

The method may also include utilizing a legacy communication scheme in a first processing SEM, and connecting the first processing SEM and the connecting SEM with a connection having a first portion that utilizes the legacy communication scheme and a second portion that utilizes a new communication scheme in compliance with the IEEE 802.3cg standard as of the effective date of filing of this patent.

The method may also include a connecting SEM that provides a multidrop link to each of the processing SEMs, without requiring direct connection of each processing SEM to a central distribution unit.

The method may also include positioning a subsea communication adapter in the connection to define the first portion and the second portion, and operating the subsea communication adapter to convert communication signals between the legacy communication scheme and the new communication scheme.

The method may also include a legacy communication scheme that is a non-Ethernet communication method.

The method may also include operating the subsea communication adapter to convert between the legacy communication scheme and the new communication scheme both on a physical level and on a protocol level.

The method may also include establishing at least one of a CAN connection, an RS-485 connection, an RS-422 connection, a RS-232 connection, or a network modem connection at a first communication interface of the subsea communication adapter, and establishing an Ethernet connection at a second communication interface of the subsea communication adapter.

The method may also include maintaining a predefined internal pressure within a subsea enclosure of the subsea communication adapter when installed subsea, where the subsea enclosure is configured to allow deployment of the subsea communication adapter in a water depth between 350 m and 5000 m.

The method may also include deploying the subsea communication adapter in water at a depth between 1000 m and 5000 m. Other technical features may be readily apparent to one skilled in the art from the following figures, descriptions, and claims.

### BRIEF DESCRIPTION OF THE DRAWINGS

To easily identify the discussion of any particular element or act, the most significant digit or digits in a reference number refer to the figure number in which that element is first introduced.
FIG. 1 is a schematic illustration of a subsea resource extraction arrangement.
FIG. 2 schematically illustrates three examples of multidrop control/communication arrangements.
FIG. 3 schematically illustrate a multidrop control/communication arrangement for a subsea system.
FIG. 4 illustrates a subsea adaptor assembly including two subsea wet-mateable connectors and a subsea communication adapter.
FIG. 5 schematically illustrates an arrangement of the subsea communication adapter of FIG. 4.

### DETAILED DESCRIPTION

In the following description, for the purposes of explanation and not limitation, specific details are set forth, such as particular components, elements, techniques, etc. in order to provide a thorough understanding of the example embodiments. However, the example embodiments may be practiced in other manners that depart from these specific details. In other instances, detailed descriptions of well-known methods and elements are omitted so as not to obscure the description of the example embodiments.

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting. Furthermore, while multiple embodiments or constructions may be described herein, any features, methods, steps, components, and the like described with regard to one embodiment are equally applicable to other embodiments absent a specific statement to the contrary.

While terms such as "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

Current systems used for distributing control information from the subsea control system to the topside control system typically utilizes high speed point-to-point links or very limited bandwidth multidrop links subsea. Such systems are not able to combine high bandwidth and flexible interconnect at the same time, which is required in modern subsea control systems. At least some of the example embodiments provided herein are directed towards providing a flexible system with improved interconnections.

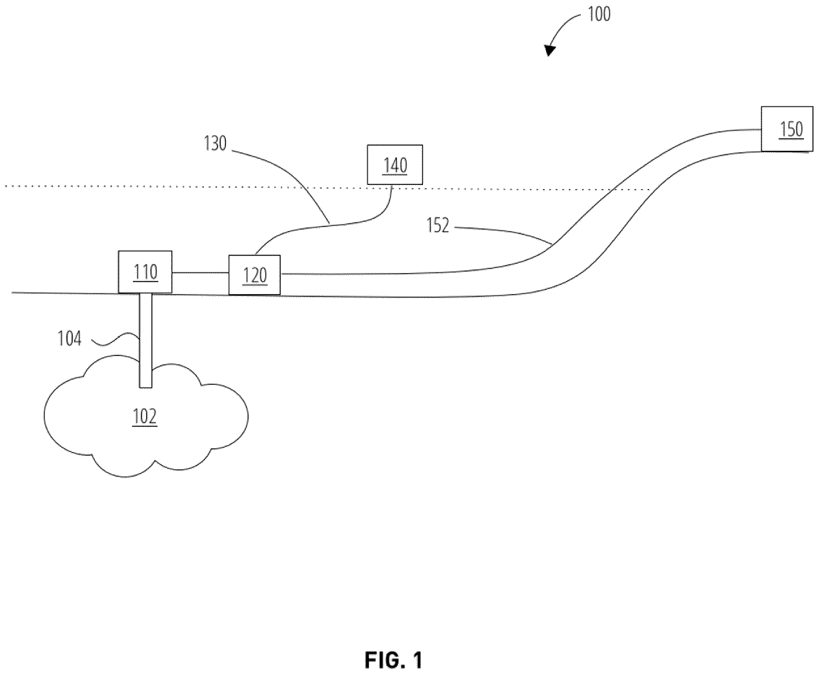

FIG. 1 schematically illustrates an extraction arrangement 100 for use in extracting subsea resources such as oil and gas from a subsea reservoir 102. A wellbore 104 is drilled into the sea floor to reach and extract the resource from the subsea reservoir 102. The wellbore 104 may be any suitable wellbore 104, including a cased wellbore, or open hole and may include production tubing for conveying the resource up the wellbore 104.

Some or all the components of the extraction arrangement 100 may be provided at subsea locations on the seabed, floating at topside locations at the sea surface near the resource field, or at onshore locations away from the resource field.

The extraction arrangement 100 may include wellhead apparatus 110 located at the head of the well. The wellhead apparatus 110 may include subsea structures and manifolds which may include a Christmas tree to seal the well and provide valves, spools, connectors and the like. The well may be tied-in through the Christmas tree to a flow system 152 through which the resource may be retrieved to an onshore apparatus 150. The subsea structures of the extraction arrangement 100 may also provide access to the well for monitoring and control of the downhole apparatus such as chokes and valves, cabling, sensors and strain gauges, and other tools, and also for interventions and workovers.

The extraction arrangement 100 may also include subsea apparatus 120 coupled to a topside apparatus 140 (including a surface control system). The subsea apparatus 120 may include one or more pumps for pumping product from one or more wellbores 104 or for pumping product along one or more flow lines. In addition, the subsea apparatus 120 may include functions like subsea processing, separation and compression or boosting for treatment of the resource from the well or the flow system 152. The subsea apparatus 120 may also include one or more Subsea Control Modules (SCM) to facilitate the management and monitoring of the extraction arrangement 100. The SCM may include multiple Subsea Electronics Modules (SEM) that each provide a data communications interface with components of the extraction arrangement 100, including various Condition and Performance Monitoring apparatus (CPM). A SEM may include or be connected to a device that gathers data for transmission or uses data transmitted to the SEM. For example, an SEM may include or be connected to a sensor that gathers data relating to one or more operating parameters. An SEM may also include or be connected to an actuator, a motor, a drive, or another controller or operable device that is used to control the position or operation of a component such as a motor, a valve, or another component. For purposes of this description, an SEM should include any component that generates or uses data.

The extraction arrangement 100 may also include an umbilical 130 that couples the subsea apparatus 120 to the topside apparatus 140. The umbilical 130 may carry hydraulic lines, fluid flow lines, electrical, and/or other signal-carrying cables to transmit control and monitoring signals between the components of the extraction arrangement 100.

The topside apparatus 140 may include a Master Control Station (MCS) provided as a centralized hardware and software platform for enabling the monitoring, control, and logging of the extraction arrangement 100 and the condition and performance monitoring of the components. The MCS may also provide an operator with one or more user interfaces at a workstation to monitor and control the extraction arrangement 100. The MCS may be coupled to several SCMs or SEMs located subsea via the umbilical 130.

The onshore apparatus 150 may include components or systems that allow an operator of the extraction arrangement 100 to monitor and control certain components and functions of the extraction arrangement 100 from onshore. For example, the logical components and software and data storage architecture making up the subsea production control system maintained in the MCS or in particular the FMS may be duplicated or synchronized to one or more onshore locations.

While FIG. 1 illustrates an extraction arrangement 100 for extracting subsea resources, the subsea control systems described herein may form part of an apparatus suitable for other subsea activities, including fluid injection, boosting, pumping, compression, and filtration. Additionally, the subsea control systems described herein may form part of an apparatus suitable for offshore energy generation and/or storage.

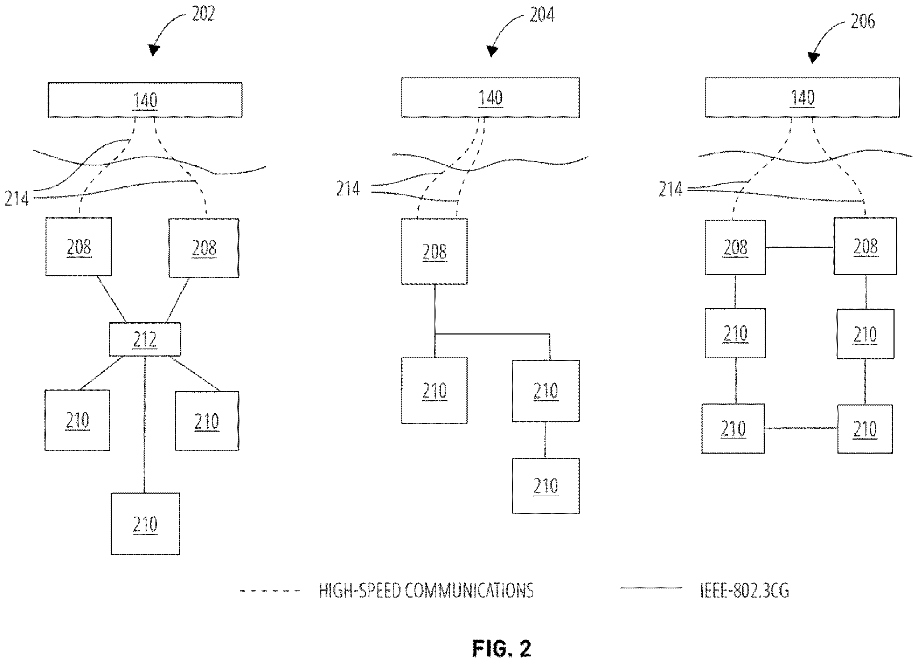

FIG. 2 illustrates examples of multidrop configurations including a star arrangement 202, tree/bus arrangement 204, and a ring arrangement 206 configuration between the SEMs of the extraction arrangement 100 and the topside apparatus 140. Each configuration includes the topside apparatus 140 in communication with two connecting SEMs 208 via high-speed conduits 214. Of course, arrangements using a single connecting SEM 208 or more than two connecting SEMs 208 are possible.

The high-speed conduits 214 may be an optical cable, or a high-speed modem and may employ Digital Subscriber Line (DSL) or Ethernet. The high-speed conduits 214 may be dedicated communication wires or power lines. Thus, the high-speed conduits 214 may be used for the sole purpose of distributing control and processing related data to and from the topside apparatus 140 and the subsea control system or subsea apparatus 120.

Each connecting SEM 208 is the point of contact between the topside apparatus 140, including any topside control system and the multidrop network. The connecting SEMs 208 may be configured to distribute control and/or process data to any number of processing SEMs 210.

The star arrangement 202 of FIG. 2 includes a central junction box 212 that distributes communications throughout the multidrop network. It should be appreciated that any other form of multidrop network configuration may be employed which allows multiple components (or SEMs) to receive information or data from a same communications channel or port (e.g., the high-speed communications conduit and the connecting SEM).

In a multidrop network, each component is connected to the same communications line or BUS and receives communications output from each of the other connected components. That is, each of the connecting SEMs 208 and the processing SEMs 210 are connected to a single communication line or BUS and may directly communicate with the remaining SEMs connected in the same multidrop network. The junction box 212 may simply comprise connections arranged to provide a single communications circuit running between each of the SEMs and may not, for example, include a switch. It will be appreciated that in a multidrop network configuration no switch is required to route signals to specific components since each SEM is connected to the same communications line or BUS. Furthermore, there is no requirement for separate point-to-point connections between the connecting SEMs 208 and the processing SEMs 210 since each of the SEMs is connected to the same communications line or BUS.

It should be appreciated that while the star arrangement 202 illustrates two high-speed conduits 214 and two connecting SEMs 208, any number of high-speed conduits 214 and connecting SEMs 208 may be employed. In addition, some of the high-speed conduits 214 and connecting SEMs 208 may be redundant components of a redundant system.

The tree/bus arrangement 204 is another topology in which the topside apparatus 140 is in communication with a single connecting SEM 208 via two high-speed conduits 214. The connecting SEM 208 is in a multidrop network with three processing SEMs 210.

In the tree/bus arrangement 204, the connecting SEM 208 may address processing SEMs 210 directly. The connecting SEM 208 may address processing SEMs 210 via other processing SEMs 210 through the tree topology. However, direct connection may also or alternatively be provided between the connecting SEM 208 and the processing SEMs 210 via the multidrop network.

The ring arrangement 206 is yet another example topology in which the topside apparatus 140 is in communication with two connecting SEMs 208 via two high-speed conduits 214. The connecting SEMs 208 are in a multidrop network with four processing SEMs 210.

In the ring arrangement 206, the connecting SEMs 208 may address processing SEMs 210 directly. The connecting SEMs 208 may address processing SEMs 210 further down the ring via other processing SEMs 210 that are more directly connected to the connecting SEMs 208.

It should be appreciated that some of the example configurations of FIG. 2, as compared to current point-to-point-based systems, provide a reduced number of communications between the topside control system (topside apparatus 140) and the subsea control system (subsea apparatus 120). That is, the use of a multidrop network means that separate point-to-point connections between a connecting SEM 208 and each of the processing SEMs 210 may not be required. In addition, it should be clear that combinations of the three topologies 202, 204, and 206 or other arrangement are also possible.

It should be appreciated that the three configurations of FIG. 2 may utilize an IEEE 802.3cg standard in communications with the high-speed conduits 214. An advantage of the use of the IEEE 802.3cg standard is that it provides for the implementation and interoperability of Single Pair Ethernet (SPE) technologies. The IEEE 802.3cg standard facilitating improved efficiency and connectivity and also allows for operation over much longer distances (e.g., 1000 meters) than did prior communication standards which were limited to a few hundred meters.

The IEEE 802.3cg standard is a standard developed by the Institute of Electrical and Electronics Engineers (IEEE) that defines the requirements for Ethernet local area networks (LANs) operating at data rates up to ten (10) megabits per second (Mbps). Specifically, IEEE802.3cg focuses on enabling Ethernet connectivity over a single twisted-pair copper cable, commonly referred to as Single Pair Ethernet (SPE). This provides a cost-effective and efficient solution for connecting various devices in industrial automation, automotive, and other application domains where only limited bandwidth is required. The IEEE 802.3cg standard specifies the physical layer (PHY) characteristics, including the electrical and signaling requirements, to facilitate reliable data transmission over the single twisted-pair cable.

One or more of the processing SEMs 210 comprises an end device. An end device is a source or destination device in the extraction arrangement 100. That is, at least one of the processing SEMs 210 may comprise a device which acts as a source of subsea related data and/or is the intended destination for the subsea related data. One or more processing SEMs 210 comprising end devices may be connected to a connecting SEM 208 in a multidrop configuration. An end device may, for example, comprise an actuator and/or sensor. The actuator and/or sensor may be suitable for use in the extraction arrangement 100 or in any other subsea process.

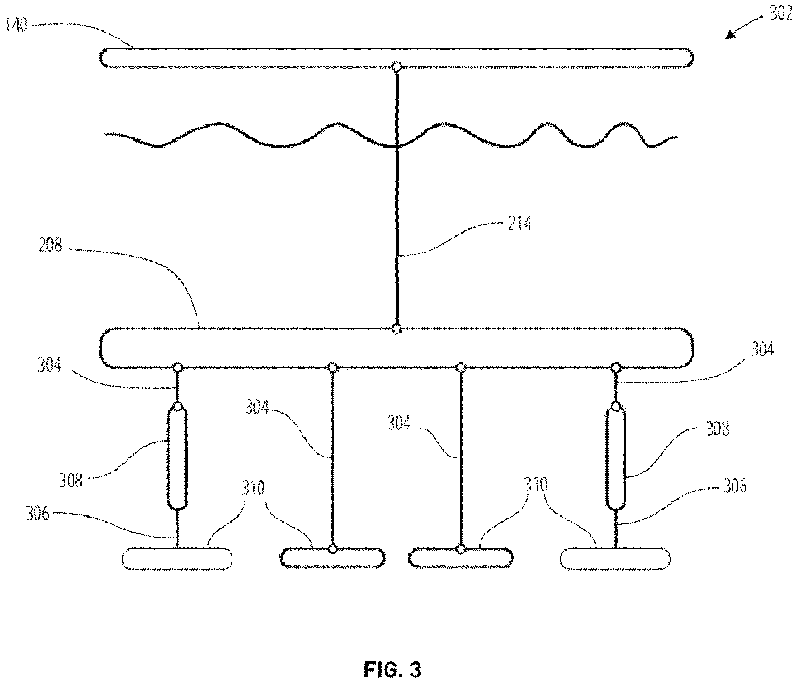

FIG. 3 illustrates a subsea communication system 302 (or control system) suitable for use with the extraction arrangement 100 illustrated in FIG. 1 and FIG. 2. The illustrated arrangement provides an upgrade of the communication infrastructure by facilitating high-speed communication along both short communication links and long communication links using both new communication schemes 304 and legacy communication schemes 306 while also allowing communication with existing or legacy subsea units 310 and new subsea units 310. The subsea units 310 illustrated herein may include connecting SEMs 208, processing SEMs 210, or other devices, components, or systems which require communication between subsea or surface components.

While some subsea units 310 may be operable using low-speed and/or low-bandwidth communication, more sophisticated or advanced subsea units 310 require increased bandwidth and/or increased data transmission speeds to operate properly and take full advantage of their capabilities. High-speed communication using the IEEE 1901 standard or other legacy communication schemes 306 are suitable for communication between components or subsea units 310 that are arranged no more than a few hundred meters (i.e., less than 500 meters) from one another. For components or subsea units 310 that are spaced further apart (e.g., 1000 meters or more) a new communication scheme 304 is required. IEEE 802.3cg was adopted and is used in the subsea communication system 302 as the new communication scheme 304 to address, among other things, these longer-range communications.

Legacy subsea units 310 may employ a legacy communication scheme 306 that allows data communication only at a reduced bandwidth compared to state-of-the-art communication methods or is limited by distance. Newer subsea units 310 may include the new communication scheme 304 or may include a legacy communication scheme 306 that is capable of high-bandwidth or high-speed but is limited by transmission distance. For those subsea units 310 that include a legacy communication scheme 306 but require high-speed, high-bandwidth, and long-distance communication, a subsea communication adapter 308 may be provided.

The subsea communication adapter 308 is selected or arranged to convert the legacy communication scheme 306 used by some subsea units 310 to the new communication scheme 304 (IEEE 802.3cg or another advanced scheme) which allows for faster communication across greater distances.

The legacy communication scheme 306 employed by the legacy subsea units 310 is incompatible with the new communication scheme 304 employed by the connecting SEM 208, the topside apparatus 140, or other newer components, thereby preventing these components from being directly linked. The subsea communication adapter 308 is connected in series with a communication line that utilizes the legacy communication scheme 306 and extends between the legacy subsea unit 310 and the connecting SEM 208. In other words, the subsea communication adapter 308 forms part of the communication link between components.

The subsea communication adapter 308 includes a first communication interface that operates according to the legacy communication scheme 306 and a second communication interface that operates according to the new communication scheme 304. Accordingly, the subsea communication adapter 308 can communicate with the connecting SEM 208 using the new communication scheme 304 and communicate with the legacy subsea unit 310 using the legacy communication scheme 306.

The subsea communication adapter 308 includes a conversion unit that provides conversion between the legacy communication scheme 306 and the new communication scheme 304. The conversion involves at least the conversion between a first communication protocol of the legacy communication scheme 306 and a second communication protocol of the new communication scheme 304. Preferably, it involves a conversion between the two communication methods both on a physical level and on a protocol level. By means of the subsea communication adapter 308, a communication with the legacy subsea unit 310 is thus achieved, even if the subsea unit 310 employs different physical communication means, such as different voltages and/or frequencies, a different communication medium, and/or a different communication protocol. The topside apparatus 140 may thus communicate with any subsea units 310 via the connecting SEM 208, directly, or through other components without the need to implement any proprietary or legacy communication methods in the connecting SEM 208. The topside apparatus 140 may for example obtain a sensor reading from one of the subsea units 310 or send a control command to another subsea unit 310, whether or not those subsea units 310 are configured to communicate using the new communication scheme 304. For subsea units 310 configured to communicate using the new communication scheme 304, no subsea communication adapter 308 is required. However, for subsea units 310 that do not communicate using the new communication scheme 304, the subsea communication adapter 308 may be employed to facilitate communication using the new communication scheme 304.

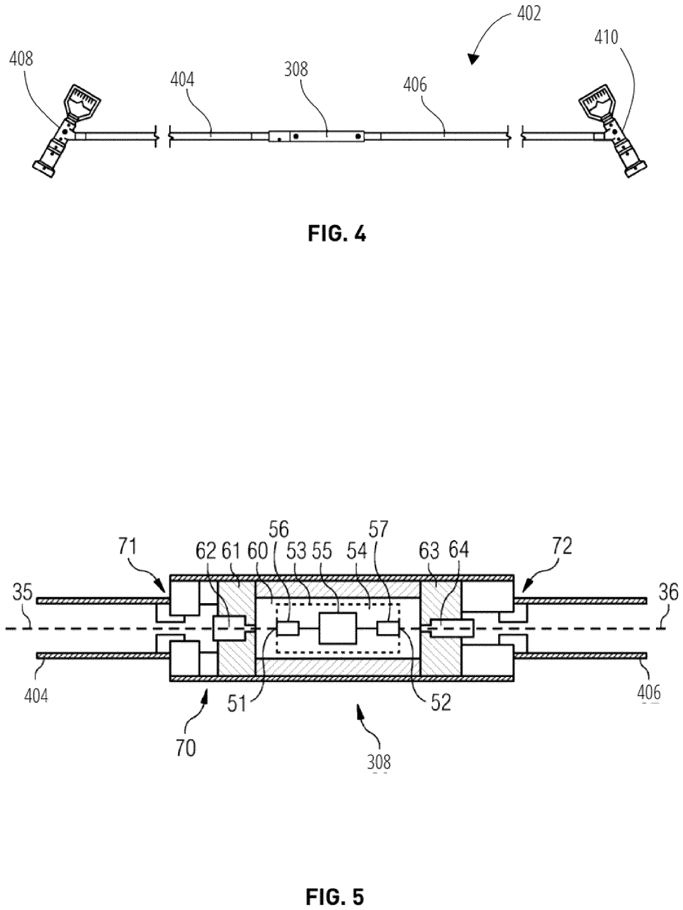

FIG. 4 illustrates one example arrangement of an adapter assembly 402 that includes the subsea communication adapter 308. Each adapter assembly 402 includes a subsea communication adapter 308, a first cable 404, a second cable 406, a first subsea connector 408, and a second subsea connector 410. The first cable 404 extends between the subsea communication adapter 308 and the first subsea connector 408 and is arranged to communicate using the legacy communication scheme 306. The second cable 406 extends between the subsea communication adapter 308 and the second subsea connector 410 and is arranged to communicate using the new communication scheme 304. Preferably, the first cable 404 is as short as possible with the second cable 406 having a length selected for the particular application.

Each of the first subsea connector 408 and the second subsea connector 410 is preferably a wet-mateable connector that is arranged to allow for connection in subsea conditions. It should be clear that the first subsea connector 408 and the second subsea connector 410 are adapted to the respective physical requirements of the respective communication method. As an example, if the legacy communication scheme 306 employs an optical communication link, the first subsea connector 408 may be an optical connector (or may at least perform a conversion of the optical signal to an electrical signal). For an electrical link, the electrical contacts of the respective first subsea connector 408 or second subsea connector 410 can be adapted in accordance with the number of signal and/or power lines employed in the respective communication link.

In other embodiments, the subsea communication adapter 308 may be mounted to or provided integrally with one of the first subsea connector 408 or the second subsea connector 410. With the embodiment as outlined in FIG. 4, the connecting SEM 208 can use standardized communication interfaces that operate according to the new communication scheme 304, preferably Ethernet interfaces.

FIG. 5 illustrates a particular implementation of the subsea communication adapter 308 that can be used with the subsea communication system 302 of FIG. 3, so the explanations given above are equally applicable. In the embodiment of FIG. 5, the subsea communication adapter 308 is provided with a subsea housing 70 in which a chamber 60 is provided. In the embodiment of FIG. 5, the subsea housing 70 is a pressure-resistant enclosure so that a predefined pressure is maintained inside the chamber 60. This may be close to atmospheric pressure, or a pressure slightly above the atmospheric pressure, such as ten bar or less, in particular 1.5 bar or less. In other configurations, the chamber 60 may be filled with a dielectric liquid or gel and may be pressure compensated against the subsea environment. For this purpose, a pressure compensator such as a flexible membrane, a bellows or bladder may be included in the subsea communication adapter 308 for providing pressure balancing. The subsea housing 70 is arranged to allow for deployment of the subsea communication adapter 308 in water between 350 M and 5000 M and more preferably between 1000 m and 5000 m. Of course, other arrangements could be deployed in shallower or deeper water if desired.

The subsea housing 70 is provided with a first fitting 71 for mounting the first cable 404, and a second fitting 72 for mounting the second cable 406. Cable sections 404, 406 may be provided by conventional subsea cables or by oil-filled hoses in which one or more conductors and/or optical fibers are disposed. By means of the first data line 35, the first part of the communication link is provided. The first data line 35 may accordingly comprise one or more electrical conductors, for example two conductors of a differential serial bus. Similarly, the data line 36 provides the second part of the communication link. Again, data line 36 may for example include two, four or more electrical conductors for data communication, or may include one or more optical fibers.

Furthermore, electrical conductors for power transmission may be provided additionally in one or both of the cable sections 404 406, or electrical power may be provided to the subsea communication adapter 308 through one of the data lines 35, 36. The subsea communication adapter 308 may for example be powered by making use of 'power over Ethernet', so that the electrical conductors providing the data line 36 may transport the electrical power. In a preferred configuration, at least two additional electrical conductors are provided in the second cable 406 for transporting electrical power. The connection provided by the second cable 406 may for example be an SIIS (Subsea Instrumentation Interface Standardization) Level-3 compliant connection comprising two Ethernet connections with four electrical conductors each, and two additional electrical conductors for power transmission. Accordingly, the first subsea connector 408 or second subsea connector 410 may be a 10 pin or 12 pin electrical connector.

For leading the data lines into the atmospheric chamber 60, penetrators 62, 64 are provided in the respective end walls 61, 63 of the subsea housing 70. The penetrators 62, 64 are capable of sealing against the data lines and of withstanding the high-pressure differences when deployed subsea. They may for example employ epoxy resin or glass as sealing material or may make use of elastomeric O-ring seals around conductors, depending on the type of data line.

The subsea communication adapter 308 includes a conversion unit 53 that converts between the legacy communication scheme 306 and the new communication scheme 304. The conversion unit 53 is disposed in the chamber 60 of subsea housing 70. The conversion unit 53 includes electric and electronic circuits on one or more circuit boards 54. The conversion unit 53 includes respective transceivers 56, 57 operating according to the respective first and second communication schemes 304, 306 for providing the first and second communication interfaces 51, 52. It further includes a micro-controller or microprocessor 55, and associated elements such as memory and the like for providing a conversion between the first and second communication protocols of the legacy communication scheme 306 and the new communication scheme 304.

The first communication interface 51 may be provided by a multidrop transceiver 56, it may for example be provided by a CAN transceiver. The first communication interface 51 may be implemented in form of a CAN Bus interface, a Serial Bus interface, such as RS-232, RS-422 or RS-485, or the first communication interface 51 may be provided by a network modem using a legacy communication scheme. Example of such network modems include an FSK (Frequency-Shift Keying), PSK (Phase-Shift Keying), QPSK (Quadrature-Phase Shift Keying) or ASK (Amplitude-Shift Keying) Modem. As a particular example, the first communication interface 51 may provide a connection according to the Bell 202 standard, which is commonly used in legacy subsea units.

The second communication interface 52 may be provided by a network interface controller 57, which may include a media access controller. Such network interface controller 57 may for example comprise a 10/100/1000-Base-T-transceiver, or it may comprise an optical transceiver operating for example according to 10-Base-F, 100-Base-FX, or 1000-Base-SX, only to name a few examples.

The type of physical interface provided by the first communication interface 51 is generally chosen in accordance with the type of physical interface used by the legacy subsea unit 310 towards which communication needs to be established. As an example, a subsea first cable 404 employing the subsea communication adapter 308 can be tailor-made to the respective legacy subsea unit 310 for enabling communication therewith.

The conversion unit 53 may for example convert between data communication received on the first communication interface 51 according to a legacy communication scheme 306 and provide conversion into the new communication scheme 304 according to the Ethernet communication protocol, and furthermore transmits the data communication via the second communication interface 52. Similarly, a data communication received at the second communication interface 52 is converted by means of the conversion unit 53 into a data communication according to the legacy communication scheme 306 for transmission on the first communication interface 51.

On the first communication interface 51, communication generally occurs in accordance with the communication protocol used by the legacy subsea unit 310 towards which a connection is to be established. This may for example be a multidrop communication protocol. In particular, it may be a CAN communication protocol, such as CAN-open, or it may be a Profibus, Modbus or other non-Ethernet communication protocol. On the second communication interface 52, data communication may occur according to an Ethernet communication protocol, and preferably IEEE 802.3cg.

The conversion unit 53 may for example extract data from an Ethernet communication received on the second communication interface 52 and may package the data in accordance with the CAN-open, Profibus or Modbus communication protocol for transmission via the first communication interface 51, and vice versa.

The subsea communication adapter 308 may thus act as an Ethernet network node on the second communication interface 52. Other nodes in such Ethernet network provided by the connecting SEM 208 will thus have the impression of direct communication with the old subsea unit 310.

The subsea communication adapter 308 can furthermore be configured to act as a master node of the respective communication protocol on the first communication interface 51, when employing a respective communication scheme requiring such master node to be present. As an example, when the legacy subsea unit 310 is configured as a slave node of a multidrop communication network, for example using RS-485 or RS-422 communication links, the subsea communication adapter 308 acts as a master node in accordance with the respective communication scheme. When acting as a master node, the subsea communication adapter 308 may for example initiate the communication with the legacy subsea unit 310. Conversion unit 53 may implement respective functions to act as a master node or of such multidrop or multi-master communication scheme.

The legacy subsea unit 310 may thus get the impression that it is still connected to a legacy communication network when communicating over the first part of the communication link with the subsea communication adapter 308.

In a particular embodiment, the subsea communication adapter 308 is configured to convert between a SIIS Level-1 or Level-2 compliant communication link on the first communication interface and an SIIS Level-3 compliant communication link on the second communication interface.

The above-described embodiments may thus allow deployment of new communication infrastructure with standardized communication interfaces, in particular Ethernet communication interfaces, while at the same time, legacy subsea units employing legacy communication methods can still form part of the subsea installation and can still be communicated with. This does not require the adaptation of interfaces of the connecting SEM 208, but specific subsea adapter assemblies 402 employing embodiments of the subsea communication adapter 308 can be used for achieving such communication.

Any proprietary legacy communication interfaces or protocols can be comprised in the subsea communication adapter 308, e.g., in subsea adapter assembly 402, thus not requiring modification of the standard interfaces of the upgraded subsea equipment. The legacy subsea unit 310 will thus not be aware of the new Ethernet communication network.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A subsea control system for transmitting and receiving subsea related data to and from a surface control system, the subsea control system comprising:
a connecting Subsea Electronic Module, SEM, in connection with a high-speed communications conduit, wherein the connecting SEM receives and transmits the subsea related data to and from the surface control system via the high-speed communications conduit; and
a plurality of processing SEMs, each processing SEM of the plurality of processing SEMs connected to the connecting SEM to receive and transmit the subsea related data, a portion of the connection between each processing SEM and the connecting SEM including a high-speed connection;
wherein the receiving and transmitting of subsea related data between the connecting SEM and the processing SEMs on the high-speed connection is in compliance with the IEEE 802.3cg standard as of the effective date of filing of this patent.

2. The subsea control system of claim 1, wherein the plurality of processing SEMs are connected with the connecting SEM to define a network having a multidrop configuration.

3. The subsea control system of claim 1 or 2, wherein the connecting SEM provides a multidrop link to each of the processing SEMs, without requiring direct connection of each processing SEM to a central distribution unit.

4. The subsea control system of any of claims 1-3, wherein a first processing SEM utilizes a legacy communication scheme, and wherein a connection between the first processing SEM and the connecting SEM includes a first portion that utilizes the legacy communication scheme and a second portion that utilizes a new communication scheme in compliance with the IEEE 802.3cg standard as of the effective date of filing of this patent.

5. The subsea control system of claim 4, further comprising a subsea communication adapter positioned in the connection to define the first portion and the second portion, the subsea communication adapter operable to convert communication signals between the legacy communication scheme and the new communication scheme.

6. The subsea control system of claim 5, wherein the subsea communication adapter is configured to convert between the legacy communication scheme and the new communication scheme both on a physical level and on a protocol level.

7. The subsea control system of any of claims 5 or 6, wherein the subsea communication adapter includes a first communication interface configured to establish at least one of a CAN connection, an RS-485 connection, an RS-422 connection, a RS-232 connection, or a network modem connection, and a second communication interface configured to establish an Ethernet connection.

8. The subsea control system of any of claims 5-7, wherein the subsea communication adapter comprises a subsea enclosure that maintains a predefined internal pressure when installed subsea, wherein the subsea enclosure is configured to allow deployment of the subsea communication adapter in a water depth between 350 m and 5000 m, and preferably between 1000 m and 5000 m.

9. A method for transmitting and receiving subsea related data to and from a surface control system and a subsea control system, the method comprising:
receiving and transmitting, in a connecting Subsea Electronic Module, SEM, the subsea related data via at least one high-speed communications conduit; and
transmitting and receiving, to and from, a plurality of processing SEMs connected with the connecting SEM, the subsea related data;
wherein the receiving and transmitting of subsea related data between the connecting SEM and each of the processing SEMs is in compliance with an IEEE 802.3cg standard as at the effective date of filing of this patent.

10. The method of claim 9, further comprising connecting the plurality of processing SEMs with the connecting SEM to define a network having a multidrop configuration.

11. The method of claims 9 or 10, further comprising utilizing a legacy communication scheme in a first processing SEM, and connecting the first processing SEM and the connecting SEM with a connection having a first portion that utilizes the legacy communication scheme and a second portion that utilizes a new communication scheme in compliance with the IEEE 802.3cg standard as of the effective date of filing of this patent.

12. The method of claim 11, further comprising positioning a subsea communication adapter in the connection to define the first portion and the second portion, and operating the subsea communication adapter to convert communication signals between the legacy communication scheme and the new communication scheme.

13. The method of claim 12, further comprising operating the subsea communication adapter to convert between the legacy communication scheme and the new communication scheme both on a physical level and on a protocol level.

14. The method of any of claims 12 or 13, further comprising establishing at least one of a CAN connection, an RS-485 connection, an RS-422 connection, a RS-232 connection, or a network modem connection at a first communication interface of the subsea communication adapter, and establishing an Ethernet connection at a second communication interface of the subsea communication adapter.

15. The method of any of claims 12-14, further comprising maintaining a predefined internal pressure within a subsea enclosure of the subsea communication adapter when installed subsea, wherein the subsea enclosure is configured to allow deployment of the subsea communication adapter in a water depth between 350 m and 5000 m, and preferably between 1000 m and 5000 m.
